# EUROPEAN PATENT APPLICATION

(11) **EP 4 852 186 A1**
(43) Date of publication of application: **09.12.2026**
(21) Application number: 25180988.5
(22) Date of filing: 05.06.2025
(51) Int. Cl.: H01M 50/308, H01M 50/325

(54) **EMERGENCY DEGASSING UNIT FOR DEGASSING A BATTERY HOUSING AND BATTERY HOUSING**

(71) Applicant: MANN+HUMMEL GmbH, 71636 Ludwigsburg (DE)
(72) Inventor: GLOCK, Tamara, 71636 Ludwigsburg (DE); PLOPPA, Martin, 71636 Ludwigsburg (DE); VOGT, Sabine, 71636 Ludwigsburg (DE)
(74) Representative: Mann + Hummel Intellectual Property

(57) **Abstract**

The present invention relates to an emergency degassing unit (100) for degassing a battery housing, comprising a base body (10) with a front side (12) and an opposing rear side (14), with a circumferentially extending rim (24) surrounding a passageway (22) for degassing, and a valve unit (30) comprising a flexible screen (32) arranged to cover an annular region of the passageway (22).

The invention further relates to a battery housing.

## Description

### Technical Field

The invention relates to an emergency degassing unit for degassing a battery housing, as well as to a battery housing, in particular of a traction battery of a motor vehicle.

### Background Art

In the event of a malfunction of the battery system, hot gases and particles may escape from the battery cells. Mostly venting units with semipermeable membranes are used which lead an emergency degassing function by burst through a spike when the gas pressure in the battery housing exceeds a certain limit. So after this event the membrane is not functional anymore. This is mostly suitable for hot degassing where the temperatures exceed 300 °C and battery cells are getting to start thermal runaway.

Reclosable venting units are also known in the art.

DE 10 2017 003 360 B3 e.g. describes a pressure-compensation device for a housing, with an inner side; an outer side; and a lattice-like cage having a gas opening. The gas opening connects the inner side and the outer side in a flow-conducting manner and is restricted, in a through-flow direction of the gas opening, by an inner edge and an outer edge. The gas opening is covered by a gas-permeable membrane, and the membrane comprises a nonwoven-fabric composite part and has at least one nonwoven-fabric layer. Further, the pressure-compensation device comprises a pressure-relief valve assigned to the membrane in a functional parallel connection, the pressure-relief valve comprising an annular screen which bulges convexly toward the outer side and is comprised of an elastomer material.

### Summary

It is an object of the invention to provide an improved emergency degassing unit for degassing a battery housing.

Another object is to provide a battery housing, in particular of a traction battery of a motor vehicle, with an improved emergency degassing unit.

According to an aspect of the invention the object is achieved by an emergency degassing unit for degassing a battery housing, comprising a base body with a front side and an opposing rear side, with a circumferentially extending rim surrounding a passageway for degassing, the base body configured for being mounted with the rear side to a degassing opening of the battery housing, and a valve unit comprising a flexible screen arranged to cover an annular region of the passageway, wherein an outer periphery of the screen comprises a sealing lip for a sealing contact with a sealing surface of the base body, in particular under resilient preloading, wherein the screen comprises an inflection region, the inflection region being arranged between an inner periphery and the outer periphery of the screen, wherein the lowest portion of the inflection region is arranged in an axial direction below the inner periphery of the screen, wherein the axial direction extends from the rear side to the front side.

According to a further aspect of the invention the another object is achieved by a battery housing, in particular of a traction battery of a motor vehicle, with an emergency degassing unit, and with at least one degassing opening, wherein the emergency degassing unit is mounted at the at least one degassing opening and is configured to open a passageway when a defined gas pressure in the battery housing exceeds a threshold value and to close the passageway when the gas pressure is below the threshold value, wherein the threshold value is a preload force of a sealing lip of a flexible screen of a valve unit of the emergency degassing unit.

Advantageous embodiments are described in the dependent claims, the description and the drawings.

An emergency degassing unit for degassing a battery housing, is proposed, comprising a base body with a front side and an opposing rear side, with a circumferentially extending rim surrounding a passageway for degassing, the base body configured for being mounted with the rear side to a degassing opening of the battery housing, and a valve unit comprising a flexible screen arranged to cover an annular region of the passageway, wherein an outer periphery of the screen comprises a sealing lip for a sealing contact with a sealing surface of the base body, in particular under resilient preloading. The screen comprises an inflection region, the inflection region being arranged between an inner periphery and the outer periphery of the screen, wherein the lowest portion of the inflection region is arranged in an axial direction below the inner periphery of the screen, wherein the axial direction extends from the rear side to the front side.

The proposed emergency degassing unit comprises a valve unit configured as an annular collar valve. The valve unit is resealable which allows the emergency degassing unit to be reused after the emergency degassing.

The valve unit comprises a flexible screen. The shape of the flexible screen with an inflection region enables for less turbulences during an emergency degassing compared to degassing units according to state of the art, resulting in a bigger amount of degassing gas flow in less time.

The valve unit opens at a defined pressure, such as, e.g., ~50mbar, when a pressure is built up inside the battery housing.

Once the pressure increases to a pressure higher than normal operating conditions, the valve unit opens and gas can flow to the outside at a maximum flow rate. The valve unit recloses when the pressure falls below a threshold value.

Favorably, the emergency degassing unit is a lifetime part under normal operating conditions.

According to a favorable embodiment of the emergency degassing unit, the lowest portion of the inflection region in the axial direction may be arranged at the same height or below an axial position relative to the sealing surface of the base body. Below means closer to the rear side than the sealing surface of the base body. Thus, a favorable streaming behaviour of the outflowing gas through the passageway of the emergency degassing unit may be achieved. Furthermore, the lower the axial position of the lowest portion of the inflection region, the better is the protection against unwanted particles or water entering from the outside of the battery housing under normal operating conditions.

According to a favorable embodiment of the emergency degassing unit, the flexible screen may have a concave shape, when seen from the front side. The concave shape of the flexible screen with an inflection region enables for even less turbulences during an emergency degassing, resulting in a bigger amount of degassing gas flow in less time.

According to a favorable embodiment, the emergency degassing unit may further comprise a gas-permeable membrane covering a region of the passageway, in particular a central region of the passageway. In particular, an inner periphery of the screen may overlap to an outer periphery of the membrane at least partially in a radial direction. The proposed emergency degassing unit may further comprise a gas-permeable membrane, e.g. comprising, or made from polytetrafluorethylene (PTFE), to facilitate breathing under normal operating conditions. Thus, at a pressure below the defined pressure, the emergency degassing unit allows a breathing rate via the gas-permeable membrane. The passageway may be closed by the membrane and the valve unit under normal operating conditions, only allowing for breathing via the gas-permeable membrane.

According to a favorable embodiment of the emergency degassing unit, the sealing lip may be in a closed position, if a force acting on the screen generated by a gas pressure in the passageway from the rear side is lower than a preload force of the sealing lip, and may be lifted off of the sealing surface and brought into an open position for emergency degassing of the battery housing providing a flow-conducting connection between the rear side and the front side, if the force acting on the screen generated by the gas pressure in the passageway from the rear side exceeds the preload force of the sealing lip.

Favorably, the valve unit may open at a defined pressure, such as, e.g. ~50mbar, when a pressure is built up inside the battery housing.

Thus, once the pressure increases to a pressure higher than normal operating conditions, the valve unit opens and gas can flow to the outside at a maximum flow rate. The valve unit recloses when the pressure falls below a threshold value. Favorably, due to the concave shape of the screen, the gas flow can take place with reduced turbulences, when compared to known solutions in the art. The gas flow can be smoothly guided along the rear side of the screen from the rear side to outlet openings at the front side of the emergency degassing unit.

According to a favorable embodiment, the emergency degassing unit may further comprise a protective cover arranged in the base body and above the valve unit in the axial direction. In particular, the protective cover may be fixed in the base body by at least one fastening element. The protective cover prevents damaging of the screen as well as of the membrane from the front side of the emergency degassing unit, meaning from an outside of the battery housing.

According to a favorable embodiment of the emergency degassing unit, the protective cover may comprise a hold-down device contacting the inflection position of the screen in a defined position in the axial direction when the sealing lip is lifted off of the sealing surface, in particular the hold-down device being integral to the protective cover. The hold-down device defines the inflection region position of the screen and enables to keep a given shape of the screen in the open state of the valve unit.

According to a favorable embodiment of the emergency degassing unit, the hold-down device may be shaped ring-like, extending opposite to the axial direction from the protective cover towards the rear side, keeping a ring of the screen in place even with the screen in an open position. Thus, the screen keeps the concave shape even under high pressures of the degassing gas flow.

According to a favorable embodiment of the emergency degassing unit, the hold-down device may extend opposite to the axial direction at least to an axial position of the sealing surface or below the axial position of sealing surface. Thus, the lowest portion of the inflection region in axial direction may be arranged at the same height or below an axial position as the sealing surface of the base body, enabling a favorable streaming behaviour of the outflowing gas through the passageway of the emergency degassing unit.

According to a favorable embodiment of the emergency degassing unit, the screen may comprise radially extending ribs for reinforcement of the screen, the ribs extending from the inner periphery towards the outer periphery. By this way, the threshold pressure for opening the valve unit for degassing may be properly defined, and/or increased.

According to a favorable embodiment of the emergency degassing unit, the protective cover may comprise a ring-shaped element at an outer periphery, the ring-shaped element being centrically inclined in the axial direction towards the front side to provide a flow guidance in an emergency degassing situation. In particular, at least one degassing opening may be arranged between the protective cover and the ring-shaped element. Thus, the streaming behaviour of the outflowing gas may favorably be influenced.

According to a favorable embodiment of the emergency degassing unit, the screen may comprise an elastomer material. Favorably, the screen may be made from an elastomer material such as Vinyl-Methyl-Silicone (VMQ). A thickness of the elastomer may be in a range from 1.0 mm to 5 mm.

According to a favorable embodiment, the emergency degassing unit may comprise a sealing element at the rear side providing an interface in a substantially fluid tight manner to the degassing opening of the battery housing. In particular, the sealing element may be a shape gasket or an O-ring. Thus, the base body may be sealed in a reliable manner to the battery housing.

Further, a battery housing, in particular of a traction battery of a motor vehicle, with an emergency degassing unit and with at least one degassing opening is proposed, wherein the emergency degassing unit is mounted at the at least one degassing opening and is configured to open a passageway when a defined gas pressure in the battery housing exceeds a threshold value and to close the passageway when the gas pressure is below the threshold value. The threshold value may be a preload force of a sealing lip of a flexible screen of a valve unit of the emergency degassing unit.

Reliable degassing of an overpressure inside the battery housing is achieved by the emergency degassing unit even for low overpressure values. If the gas causing the overpressure is vented and a normal pressure inside the battery housing is established again the reclosable valve unit of the emergency degassing unit closes again for further functioning of the battery.

### Brief Description of Drawings

The drawings show:
- Fig. 1: an emergency degassing unit for degassing a battery housing, according to an embodiment of the invention, in an isometric view from a front side;
- Fig. 2: the emergency degassing unit according to Fig. 1 from a rear side;
- Fig. 3: a sectional isometric view of the emergency degassing unit according to Fig. 1 in a closed position of a valve unit;
- Fig. 4: a sectional view of the emergency degassing unit according to Fig. 1 in a closed position of the valve unit;
- Fig. 5: a sectional view of the emergency degassing unit according to Fig. 1 in an open position of the valve unit;
- Fig. 6: a sectional isometric view of the emergency degassing unit in a closed position of the valve unit, according to a further embodiment of the invention;
- Fig. 7: a sectional view of the emergency degassing unit according to Fig. 6 in a closed position of the valve unit; and
- Fig. 8: a sectional view of the emergency degassing unit according to Fig. 6 in an open position of the valve unit.

### Detailed Description

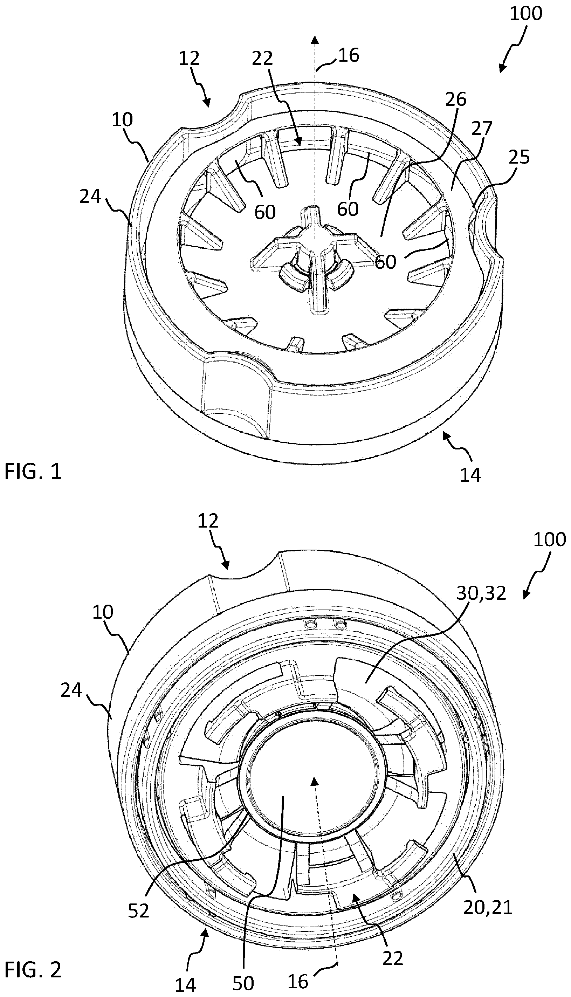

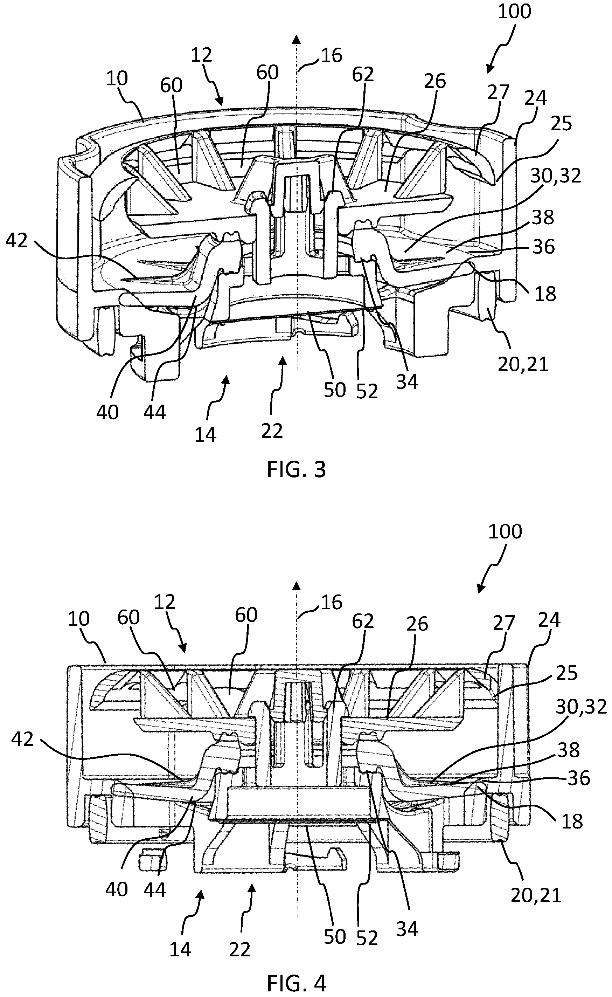

Figure 1 depicts an emergency degassing unit 100 for degassing a battery housing, according to an embodiment of the invention, in an isometric view from a front side 12. In Figure 2 the emergency degassing unit 100 is depicted from a rear side 14. Figure 3 shows a sectional isometric view of the emergency degassing unit 100 in a closed position of a valve unit 30.

The emergency degassing unit 100 comprises a base body 10 with a front side 12 and an opposing rear side 14. The base body 10 comprises a circumferentially extending rim 24 surrounding a passageway 22 for degassing.

The base body 10 is configured for being mounted with the rear side 14 to a degassing opening of the battery housing (not shown). For this purpose, the base body 10 comprises a sealing element 20 at the rear side 14 providing an interface in a substantially fluid tight manner to the degassing opening of the battery housing, as may be seen from Figures 2 and 3. The sealing element 20 may be a shape gasket 21 (as is shown) or an O-ring.

A valve unit 30 comprising a flexible screen 32 is arranged to cover an annular region of the passageway 22. The flexible screen 32 may advantageously have a concave shape when seen from the front side 12. The screen 32 may comprise an elastomer material, such as silicon rubber, such as vinyl methyl silicone VMQ.

An outer periphery 36 of the screen 32 comprises a sealing lip 38 for a sealing contact with a sealing surface 18 of the base body 10, in particular under resilient preloading.

The screen 32 comprises an inflection region 40. The inflection region 40 is arranged between an inner periphery 34 and the outer periphery 36 of the screen 32. The lowest portion 44 of the inflection region 40 is arranged in an axial direction 16 below the inner periphery 34 of the screen 32. The axial direction extends from the rear side 14 to the front side 12 of the emergency degassing unit 100.

Favorably, the lowest portion 44 of the inflection region 40 in the axial direction 16 may be arranged at the same height or below an axial position as the sealing surface 18 of the base body 10 for proper gas flow during degassing of the battery housing. The lower the axial position of the inflection region 40 is, the higher is the resilient preloading.

Further, the screen 32 comprises radially extending ribs 42 for reinforcement of the screen 32. The ribs 42 extend from the inner periphery 34 towards the outer periphery 36.

According to an embodiment, a region of the passageway 22, in particular a central region of the passageway 22, may be covered by a gas-permeable membrane 50, allowing for breathing between an inside of the battery housing and an outside of the battery housing for pressure equalization. In this case, an inner periphery 34 of the screen 32 overlaps to an outer periphery 52 of the membrane 50 at least partially in a radial direction. Thus, the passageway 22 is closed by the membrane 50 and the screen 32 under normal operating conditions. Optionally, however, the emergency degassing unit 100 can be embodied without such a gas-permeable membrane 50.

In Figure 1, where the emergency degassing unit 100 is shown from the front side 12, it is to be seen that the emergency degassing unit 100 is partly closed to the outside by a protective cover 26 which is arranged in the base body 10 and above the valve unit 30 in the axial direction 16. The protective cover 26 is fixed in the base body 10 by a number of fastening elements 62 with hooks for fixation of the protective cover 26, as is to be seen from Figure 3. Alternatively, the fastening element 62 may be configured with a tube-like shape.

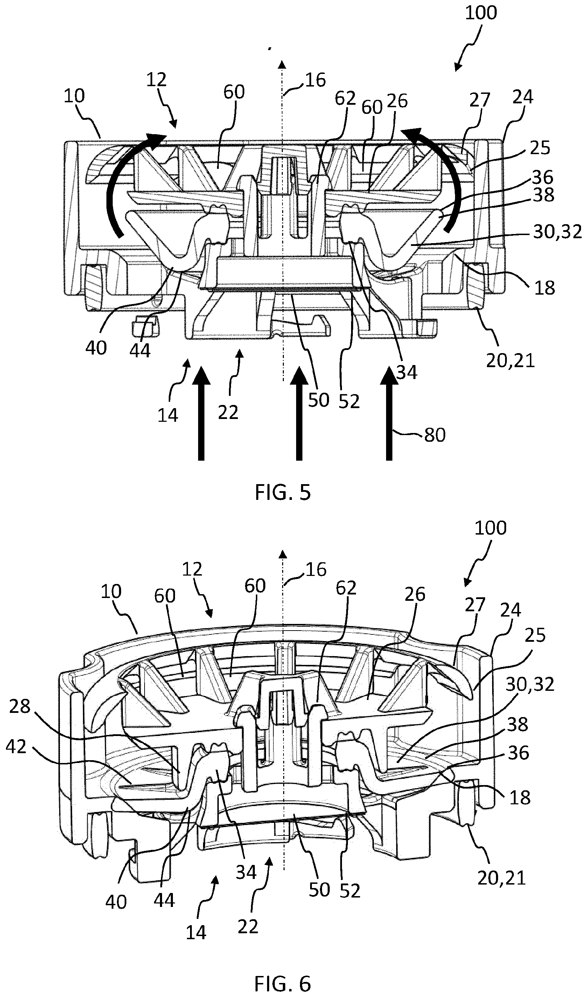

Figure 4 depicts a sectional view of the emergency degassing unit 100 according to Figure 1 in a closed position of the valve unit 30, whereas in Figure 5 a sectional view of the emergency degassing unit 100 in an open position of the valve unit 30 is depicted.

The sealing lip 38 of the screen 32 of the valve unit 30 is in a closed position, if a force acting on the screen 32 generated by a gas pressure in the passageway 22 from the rear side 14 is lower than a preload force of the sealing lip 38.

If the force acting on the screen 32 generated by the gas pressure in the passageway 22 from the rear side 14 exceeds the preload force of the sealing lip 38, the sealing lip 38 is lifted off of the sealing surface 18 and brought into an open position for emergency degassing of the battery housing providing a flow-conducting connection between the rear side 14 and the front side 12.

In Figure 5 black arrows indicate the through-flow direction 80 of the gas flow during degassing. The gas flow enters the base body 10 through the rear side 14 streaming between the deflected inflection region 40 of the screen 32 and the rim 24 of the base body 10. The screen 32 guides the gas flow smoothly towards the outside of the emergency degassing unit 100.

The protective cover 26 comprises a ring-shaped element 27 at an outer periphery 25, which is centrically inclined in the axial direction 16 towards the front side 12 to provide a flow guidance in an emergency degassing situation. Degassing openings 60 are arranged between the protective cover 26 and the ring-shaped element 27.

Thus, the gas flow streaming through the degassing openings 60 of the protective cover 26 is deflected by the ring-shaped element 27 and leaves the emergency degassing unit 100 as an essentially focused gas stream.

Figure 6 depicts a sectional isometric view of the emergency degassing unit 100 in a closed position of the valve unit 30, according to a further embodiment of the invention.

In this embodiment, the protective cover 26 comprises a hold-down device 28 contacting the inflection position 40 of the screen 32 in a defined position in the axial direction 16 when the sealing lip 38 is lifted off of the sealing surface 18. The hold-down device 28 is integral to the protective cover 26.

The hold-down device 28 may be shaped ring-like, extending opposite to the axial direction 16 from the protective cover 26 towards the rear side 14.

The hold-down device 28 may extend opposite to the axial direction 16 at least to an axial position of the sealing surface 18 or below the axial position of sealing surface 18.

The hold-down device 28 defines the position of the inflection region 40 of the screen 32 and enables to keep a given shape of the screen 32 in the open state of the valve unit 30. Thus, the screen 32 keeps its, in particular concave, shape even under high pressures of the degassing gas flow. The lowest portion 44 of the inflection region 40 in axial direction 16 may be arranged at the same height or below an axial position as the sealing surface 18 of the base body 10, enabling a favorable streaming behaviour of the outflowing gas through the passageway 22 of the emergency degassing unit 100.

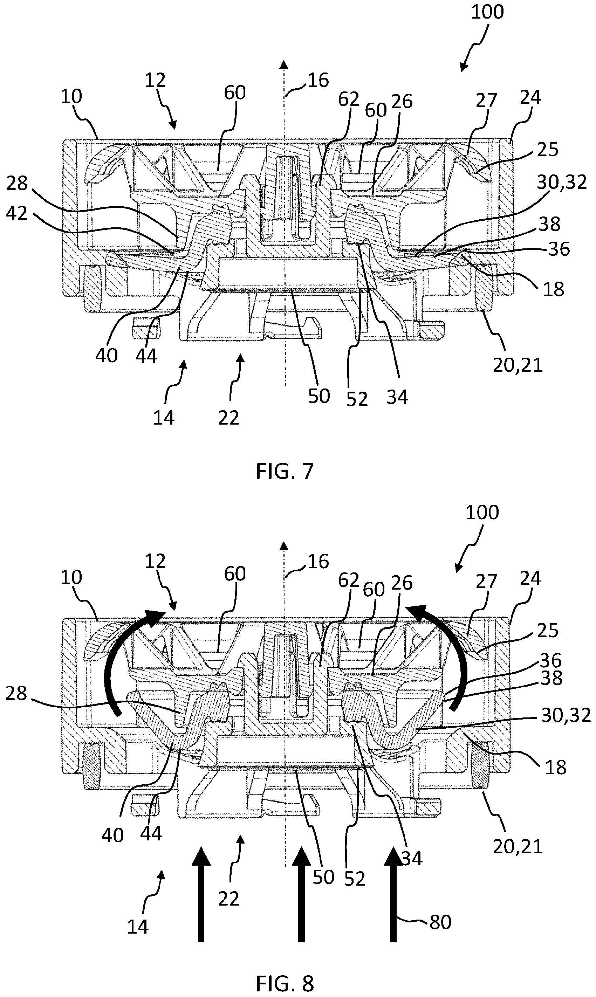

In Figure 7 a sectional view of the emergency degassing unit 100 according to Figure 6 is shown in a closed position of the valve unit 30, whereas Figure 8 depicts a sectional view of the emergency degassing unit 100 in an open position of the valve unit 30.

The behaviour of the screen 32 under the gas pressure, when degassing of the battery housing starts, is similar to the conditions shown in Figures 4 and 5 for the previous embodiment. Yet, with the hold-down device 28 arranged at the protective cover 26 the, in particular concave, shape of the screen 32 may be guaranteed even for higher gas pressures.

### Reference Numbers

- 10: base body
- 12: front side
- 14: rear side
- 16: axial direction
- 18: sealing surface
- 20: sealing element
- 21: shape gasket
- 22: passageway
- 24: rim
- 25: outer periphery
- 26: protective cover
- 27: ring-shaped element
- 28: hold-down device
- 30: valve unit
- 32: screen
- 34: inner periphery
- 36: outer periphery
- 38: sealing lip
- 40: inflection region
- 42: rib
- 44: lowest portion
- 50: membrane
- 52: outer periphery
- 60: opening
- 62: fastening element
- 80: through-flow direction
- 100: emergency degassing unit

## Claims

1. An emergency degassing unit (100) for degassing a battery housing, comprising
a base body (10) with a front side (12) and an opposing rear side (14) with a circumferentially extending rim (24) surrounding a passageway (22) for degassing, the base body (10) configured for being mounted with the rear side (14) to a degassing opening of the battery housing, and
a valve unit (30) comprising a flexible screen (32) arranged to cover an annular region of the passageway (22),
wherein an outer periphery (36) of the screen (32) comprises a sealing lip (38) for a sealing contact with a sealing surface (18) of the base body (10), in particular under resilient preloading,
wherein the screen (32) comprises an inflection region (40), the inflection region (40) being arranged between an inner periphery (34) and the outer periphery (36) of the screen (32), wherein the lowest portion (44) of the inflection region (40) is arranged in an axial direction (16) below the inner periphery (34) of the screen (32), wherein the axial direction extends from the rear side (14) to the front side (12).

2. The emergency degassing unit according to claim 1, wherein the lowest portion (44) of the inflection region (40) in the axial direction (16) is arranged at the same height or below an axial position relative to the sealing surface (18) of the base body (10).

3. The emergency degassing unit according to claim 1 or 2, wherein the flexible screen (32) has a concave shape, when seen from the front side (12).

4. The emergency degassing unit according to any one of the preceding claims, further comprising a gas-permeable membrane (50) covering a region of the passageway (22), in particular a central region of the passageway (22), , in particular wherein an inner periphery (34) of the screen (32) overlaps to an outer periphery (52) of the membrane (50) at least partially in a radial direction.

5. The emergency degassing unit according to any one of the preceding claims, wherein the sealing lip (38) is in a closed position, if a force acting on the screen (32) generated by a gas pressure in the passageway (22) from the rear side (14) is lower than a preload force of the sealing lip (38), and is lifted off of the sealing surface (18) and brought into an open position for emergency degassing of the battery housing providing a flow-conducting connection between the rear side (14) and the front side (12), if the force acting on the screen (32) generated by the gas pressure in the passageway (22) from the rear side (14) exceeds the preload force of the sealing lip (38).

6. The emergency degassing unit according to according to any one of the preceding claims, further comprising a protective cover (26) arranged in the base body (10) and above the valve unit (30) in the axial direction (16),
in particular, wherein the protective cover (26) is fixed in the base body (10) by at least one fastening element (62).

7. The emergency degassing unit according to claim 5, wherein the protective cover (26) comprises a hold-down device (28) contacting the inflection position (40) of the screen (32) in a defined position in the axial direction (16) when the sealing lip (38) is lifted off of the sealing surface (18), in particular the hold-down device (28) being integral to the protective cover (26).

8. The emergency degassing unit according to claim 6, wherein the hold-down device (28) is shaped ring-like, extending opposite to the axial direction (16) from the protective cover (26) towards the rear side (14).

9. The emergency degassing unit according to any one of the claims 7 or 8, wherein the hold-down device (28) extends opposite to the axial direction (16) at least to an axial position of the sealing surface (18) or below the axial position of sealing surface (18).

10. The emergency degassing unit according to any one of the preceding claims, wherein the screen (32) comprises radially extending ribs (42) for reinforcement of the screen (32), the ribs (42) extending from the inner periphery (34) towards the outer periphery (36).

11. The emergency degassing unit according to any one of the claims 6 to 10, wherein the protective cover (26) comprises a ring-shaped element (27) at an outer periphery (25), the ring-shaped element (27) being centrically inclined in the axial direction (16) towards the front side (12) to provide a flow guidance in an emergency degassing situation,
in particular, wherein at least one degassing opening (60) is arranged between the protective cover (26) and the ring-shaped element (27).

12. The emergency degassing unit according to any one of the preceding claims, wherein the screen (32) comprises an elastomer material.

13. The emergency degassing unit according to any one of the preceding claims, comprising a sealing element (20) at the rear side (14) providing an interface in a substantially fluid tight manner to the degassing opening of the battery housing, in particular, wherein the sealing element (20) is a shape gasket (21) or an O-ring.

14. A battery housing, in particular of a traction battery of a motor vehicle, with an emergency degassing unit (100) according to any one of the preceding claims, and with at least one degassing opening,
wherein the emergency degassing unit (100) is mounted at the at least one degassing opening and is configured to open a passageway (22) when a defined gas pressure in the battery housing exceeds a threshold value and to close the passageway (22) when the gas pressure is below the threshold value,
wherein the threshold value is a preload force of a sealing lip (38) of a flexible screen (32) of a valve unit (30) of the emergency degassing unit (100).
